Europäisches Patentamt

European Patent Office

Office européen des brevets

(11) Veröffentlichungsnummer: **0 011 667**
**B2**

(12) **NEUE EUROPÄISCHE PATENTSCHRIFT**

(45) Veröffentlichungstag der neuen Patentschrift:
**25.09.85**

(21) Anmeldenummer: **79101218.0**

(22) Anmeldetag: **23.04.79**

(51) Int. Cl.⁴: **C 08 K 3/22**, C 01 F 7/34

(54) **Verfahren zur Herstellung von Aluminiumtrihydroxid und dessen Verwendung als Füllstoff.**

(30) Priorität: **02.12.78 DE 2852273**

(43) Veröffentlichungstag der Anmeldung:
**11.06.80 Patentblatt 80/12**

(45) Bekanntmachung des Hinweises auf die Patenterteilung:
**08.09.82 Patentblatt 82/36**

(45) Bekanntmachung des Hinweises auf die Entscheidung
über den Einspruch:
**25.09.85 Patentblatt 85/39**

(84) Benannte Vertragsstaaten:
**BE CH FR GB IT LU NL SE**

(56) Entgegenhaltungen:
**DE - B - 868 601
DE - C - 830 944
GB - A - 2 010 855
US - A - 2 247 624
US - A - 2 352 867
US - A - 3 563 939**

(73) Patentinhaber: **VEREINIGTE ALUMINIUM-WERKE
AKTIENGESELLSCHAFT,
Postfach 2468 Georg-von-Boeselager-Strasse 25,
D-5300 Bonn 1 (DE)**

(72) Erfinder: **Greber, Jörg Friedrich, Dr., Brüsseler
Strasse 35, D-5300 Bonn 1 (DE)**
Erfinder: **Winkhaus, Günter, Prof.Dr., Auf dem
Stappenberg 2 b, D-5330 Königswinter 1 (DE)**

(74) Vertreter: **Müller-Wolff, Thomas, Dipl.-Ing.,
Georg-vón-Boeselager-Strasse 25 Postfach 2468,
D-5300 Bonn 1 (DE)**

EP 0 011 667 B2

## Beschreibung

Die Erfindung betrifft Kunststoffmassen, Formmassen oder Formkörper auf der Basis polymerer Stoffe.

Es ist bekannt, Aluminiumtrihydroxid als Füllstoff für polymere Stoffe, insbesondere Kunststoffe einzusetzen. Dabei wird aber eine flammenhemmende Wirkung erzielt, wenn eine ausreichende Menge des Aluminiumtrihydroxids in den Kunststoff eingemischt ist. Die Einarbeitung des Aluminiumtrihydroxids in den Kunststoff geschieht üblicherweise vor der Weiterverarbeitung durch Giessen, Pressen oder andere Verformungsprozesse.

Das für die Kunststoffindustrie bisher hauptsächlich verwendete Aluminiumtrihydroxid wird direkt aus dem Bayer-Prozess gewonnen. Die Oberflächen der einzelnen Hydroxidkörner sind scharfkantig, stark strukturiert und zerklüftet. Der mittlere Durchmesser beträgt üblicherweise 40-100 µm. Beim Einmischen in den Kunststoff ergeben sich rauhe Oberflächen auf den Kunststoffmassen, Formmassen oder Formkörpern.

Als Füllstoff für Kunststoffe werden auch gemahlene Hydroxide verwendet, die einen mittleren Korndurchmesser von 5-25 µm haben. Beim Mahlvorgang werden die Körner zerbrochen, wobei sie zersplittern. Es entsteht ein hoher Anteil an feinsten Bruchstücken und staubfreiem Abrieb.

Es ist Stand der Technik, in Kunststoffteile die beschriebenen Aluminiumtrihydroxide einzubetten. Bei der Massenfertigung von mit Aluminiumtrihydroxid ausgerüsteten Kunststoffgegenständen haben sich jedoch bisweilen Nachteile gezeigt. So änderte sich unvorhersehbarerweise während der Fertigung die Viskosität der Kunststoffmassen, so dass die Verarbeitungsbedingungen nicht eingehalten werden konnten. Es wurde auch ein hoher Anstieg der Viskositätswerte beobachtet, der eine Weiterverarbeitung der Kunststoffmassen mit herkömmlichen Verfahren verhinderte.

Nach DE-OS Nr. 2743682 ist bekannt, zur Beeinflussung der Viskosität in Aluminiumtrihydroxid enthaltende Kunststoffmassen, Formmassen oder Formkörper Silane einzumischen. Der Viskositätsanstieg lässt sich jedoch damit nicht immer so weit unterdrücken, dass gute Verarbeitungseigenschaften gewährleistet sind. Das Einbringen von Silanen in Kunststoffmassen, Formmassen oder Formkörper ist zudem technisch aufwendig, da sie in einem getrennten Verfahrensschritt auf die Hydroxidteilchen aufgebracht werden müssen.

Ferner wurde bei der Verwendung von üblichen Aluminiumtrihydroxid als Füllstoff für Kunststoffe festgestellt, dass bisweilen die Biegefestigkeit der Verbundteile erheblich abfiel. So wurde bei Kunststoff/Aluminiumtrihydroxid-Mischungsverhältnissen, wie sie zur Flammenfestmachung der gefüllten Kunststoffe (z.B. ungesättigte Polyesterharze) notwendig sind, eine um die Hälfte reduzierte Biegefestigkeit ermittelt.

Aus der US-PS Nr. 3653937 ist bekannt, dass Aluminiumtrihydroxid aus dem Bayer-Prozess mit Natron- oder Kalilauge erwärmt und anschliessend abfiltriert wird. Bei diesem Verfahren liegt die Teilchengrösse des Ausgangsmaterials bei etwa 0,7 µm und die Konzentration der alkalischen Lösung wird mit 50 g/l Feststoffanteile angegeben. Ferner wird das bekannte Verfahren so ausgeübt, dass nach Behandlung mit der Alkalilauge die gleiche Partikelgrösse wie vor der Behandlung erhalten wird.

Aufgabe der vorliegenden Erfindung ist es, schwer entflammbare Kunststoffmassen, Formmassen oder Formkörper mit gleichbleibend guten Verarbeitungseigenschaften und hoher Festigkeit herzustellen, die eine gleichbleibend glatte Oberfläche aufweisen. Erfindungsgemäss wird dies gelöst durch die in den Patentansprüchen angegebenen Merkmale.

Die Körner des erfindungsgemäss hergestellten Aluminiumtrihydroxids bestehen aus Kristallaggregaten, die aus einer bedeutend kleineren Zahl von Primärkristallen zusammengesetzt sind als die Körner des Ausgangshydroxids. Damit verbunden ist der mittlere Korndurchmesser des erfindungsgemäss hergestellten Aluminiumtrihydroxids kleiner als der des Ausgangshydroxids. Als besonderes Kennzeichen weisen die Körner des erfindungsgemäss hergestellten Produkts im Gegensatz zum Ausgangshydroxid und bedingt durch das Anlösen beim Herstellprozess abgerundete Kanten und Ecken auf.

Der Herstellungsprozess bewirkt zudem, dass Feinstanteile im Ausgangshydroxid weitgehend aufgelöst werden und das erfindungsgemäss hergestellte Produkt einen nur sehr geringen Feinstkornanteil < 2 µm aufweist.

Im Gegensatz zum gemahlenen Hydroxid lässt sich das erfindungsgemäss hergestellte Hydroxid leicht in polymere Stoffe einmischen. Die daraus hergestellten Kunststoffmassen, Formmassen oder Formkörper zeigen eine hohe Biegefestigkeit.

Ein spezielles Herstellungsverfahren gemäss Patentanspruch 1 verläuft in folgenden Schritten: Eine aus dem Bayer-Verfahren gewonnene Lauge besteht aus beispielsweise 140 g/l freier $Na_2O$ und 140 g/l $Al_2/O_3$. Diese Lauge wird 48 h lang ausgerührt und dabei in einen schwach übersättigten Zustand mit 80 g/l $Al_2O_3$ gebracht. Anschliessend wird die Lauge auf 100°C erhitzt, wodurch sie in eine an Aluminium untersättigte Lösung überführt wird. Die erhitzte untersättigte Lösung wird mit festem Aluminiumtrihydroxid, das einen mittleren Korndurchmesser von 65 µm aufweist, in eine Suspension mit einem Feststoffanteil von 550 g/l überführt. Nach einer Kontaktzeit von 3 h wird das erhaltene feste Produkt abfiltriert und mit den üblichen Behandlungsschritten zu einem Kunststoffe einmischbaren Hydroxid aufbereitet.

Die Erfindung wird anhand eines Vergleichsbeispiels erläutert.

Vergleichsbeispiel

Aluminiumtrihydroxidproben werden mit ungesättigtem Polyesterharz im Gewichtsverhältnis 1:1 gemischt. An diesen Mischungen wird die Viskosität gemessen. Die Mischungen werden mit Peroxidhärter unter Zusatz von Kobaltbeschleuniger ausgehärtet. Die ausgehärteten Massen werden zu Prüfkörpern der Abmessungen 10×10×120 mm zuerteilt, und an diesen wird die Biegefestigkeit gemessen.

1) Eingesetztes Hydroxid: Gemahlenes Bayer-Hydroxid, Al(OH)₃, mit einem mittleren Korndurchmesser von 25 µm und einem Anteil < 2 µm von 1%.

Germessene Viskosität bei 20°C:   8,2 Pa/s
Gemessene Biegefestigkeit:   52 N/mm²
Oberflächenrauhigkeit:   glatt

2) eingesetztes Hydroxid: Aus dem Bayer-Prozess erhaltenes Al(OH)₃ mit einem mittleren Korndurchmesser von 60 µm und einem Anteil < 2 µm von weniger als 0,1%.

Gemessene Viskosität bei 20°C:   2,2 Pa/s
Gemessene Biegefestigkeit:   54 N/mm²
Oberflächenrauhigkeit:   rauh

3) Eingesetztes Hydroxid: Nach Patentanspruch 2 hergestelltes Al(OH)₃ mit einem mittleren Korndurchmesser von 25 µm und einem Anteil < 2 µm von weniger als 0,1%.

Gemessene Viskosität bei 20°C:   2,3 Pa/s
Gemessene Biegefestigkeit:   66 N/mm²
Oberflächenrauhigkeit:   glatt

Aus dem Vergleichsbeispiel ergibt sich, dass bekannte Kunststoffmassen, Formmassen oder Formkörper gemäss 1) ungünstige Viskositätswerte und eine niedrige Biegefestigkeit aufweisen. Verbesserte Kunststoffmassen, Formmassen oder Formkörper mit einem grösseren mittleren Korndurchmesser des Aluminiumtrihydroxids von 60 µm gemäss 2) haben zwar eine günstigere Viskosität, jedoch unbefriedigende Biegefestigkeitswerte und eine rauhe Oberfläche. Erst die erfindungsgemässen Kunststoffmassen, Formmassen oder Formkörper gemäss 3) zeigen eine günstige Viskosität mit einer hohen Biegefestigkeit bei glatter Oberfläche.

**Patentansprüche**

1. Kunststoffmassen, Formmassen oder Formkörper auf der Basis polymerer Stoffe, enthaltend Aluminiumtrihydroxid Al(OH)₃, dessen Einzelkristalle bzw. Körner eine abgerundete Form aufweisen, wobei der Anteil an Einzelkristallen bzw. Körnern des Aluminiumtrihydroxids mit einem Durchmesser von weniger als 2 µm unter 0,1 Vol.% und der mittlere Korn- bzw. Kritstalldurchmesser unter 35 µm liegt.

2. Verfahren zur Herstellung des in den Kunststoffmassen, Formmassen oder Formkörpern nach Anspruch 1 enthaltenen Aluminiumtrihydroxids, dadurch gekennzeichnet, dass eine nach dem Bayer-Verfahren gewonnene Lauge nach dem Impfen mit festem Aluminiumtrihydroxid durch Auskristallisation von Aluminiumtrihydroxid in einen schwach übersättigten Zustand gebracht wird, die Lauge durch Temperatursteigerung in eine an Aluminium untersättigte Lösung überführt wird, wobei die Temperatur unterhalb des Siedepunktes gehalten wird, die erhitzte, untersättigte Lösung mit festem Al(OH)₃ für 1 bis 25 h in Kontakt gehalten und anschliessend das erhaltene feste Produkt abfiltriert wird.

3. Verwendung von Aluminiumtrihydroxid, das gemäss Patentanspruch 2 hergestellt wurde, als flammhemmender Füllstoff in polymeren Stoffen.

**Revendications**

1. Matières synthétiques, matières moulables ou corps moulables à base de corps polymériques, contenant du trihydroxyde d'aluminium Al(OH)₃, dont les cristaux isolés ou de grains présentent une forme arrondie, la fraction de cristaux isolés ou de grains du trihydroxyde d'aluminium ayant un diamètre inférieur à 2 µm se situant en dessous de 0,1% en volume et le diamètre moyen des grains ou des cristaux se situant en dessous de 35 µm.

2. Procédé de préparation de trihydroxyde d'aluminium aux fins d'utilisation dans les matières synthétiques, matières moulables ou corps moulables selon la revendication 1, caractérisé en ce qu'on amène une liquer obtenue selon le procédé Bayer après l'amorçage avec l'hydroxyde d'aluminium solide, par crystallisation de l'hydroxyde d'aluminium, en un état faiblement sursaturé, en ce qu'on transforme la liquer, par une augmentation de température, en une solution sous-saturée en aluminium, en maintenant la température en dessous du point d'ébullition, en ce qu'on maintient la solution sous-saturée chauffée en contact pendant 1 à 25 h avec du Al(OH)₃ solide, puis en ce qu'on filtre le produit solide obtenu.

3. Application de trihydroxyde d'aluminium, préparé selon la revendication 2 comme charge ignifuge dans les matières polymériques.

**Claims**

1. Plastic materials, molding materials or molds on polymeric basis, containing aluminium trihydroxide, Al(OH)₃, of which the individual crystals or grains have a rounded shape and the percentage of the individual crystals or grains of this aluminium trihydroxide having a diameter of less than 2 µm is below 0,1 percent by volume and its mean grain or crystal diameter is less than 35 µm.

2. A process for producing aluminium trihydroxide contained in plastic materials, molding materials or molds on polymeric basis according to claim 1, characterized by seeding the Bayer process liquor with solid aluminum trihydroxide, crystallizing aluminum trihydroxide from the solution converting the slightly supersaturated solution thus obtained to an undersaturated one by increasing its temperature but keeping the temperature below the boiling point of the solution, and maintaining the heated undersaturated solution in contact with solid Al(OH)$_3$ for 1 to 25 h and subsequently filtering off the obtained product.

3. Use of aluminium trihydroxide prepared according to claim 2 as a flame retardant filler in polymeric materials.